# EUROPEAN PATENT APPLICATION

(11) **EP 1 336 923 A2**
(43) Date of publication of application: **20.08.2003**
(21) Application number: 03003610.7
(22) Date of filing: 17.02.2003
(51) Int. Cl.: G06F 17/30

(54) **File download system, program for downloading file and file creating system**

(30) Priority: 18.02.2002 JP 2002039686
(71) Applicant: RISO KAGAKU CORPORATION, Tokyo (JP)
(72) Inventor: Akiyama, Hideki, Riso Kagaku Corp. R&D Center, Inashiki-gun, Ibaraki-ken (JP); Inamine, Noboru, Riso Kagaku Corp. R&D Center, Inashiki-gun, Ibaraki-ken (JP)
(74) Representative: Klunker . Schmitt-Nilson . Hirsch

(57) **Abstract**

In a file download system for downloading a file to a computer having a first operating system, the attribute of a second operating system which created the file to be downloaded is read. The file name of the file to be downloaded is changed to a file name conforming to the first operating system or the operator of the computer is caused to input a file name with the file name of the file to be downloaded not displayed, when the attribute of the second operating system is unknown or is different from the attribute of the first operating system, and the file is copied under the file name obtained.

## Description

### BACKGROUND OF THE INVENTION

### Field of the Invention

This invention relates to a file download system and a file download program for downloading a file and a file creating system for creating a file.

### Description of the Related Art

With the expansion of the network function in the operating system (OS) of computers and/or the network hardware technology, transfer of file between computers is moving from a conventional indirect system using a mobile medium such as a floppy disc ®, a CD-ROM or an MO to a direct system by way of a LAN or a WAN. In the direct system, when a file in a host computer (a computer from which a file is to be transferred to another computer or other computers) is to be downloaded to a client computer (a computer to which a file is to be transferred from a host computer), the operator starts up a download program installed in the client computer and specifies the name of a desired file and a desired retention location (normally a file folder), and the host computer copies content of the desired file to the desired retention location in the client computer. At this time, the download procedures can be substantially divided into the following three procedures by the kind of the download program.
1. The content of the desired file is copied under the original name of the desired file in the host computer and is stored in the specified folder.
2. The original name of the desired file to be downloaded is displayed in a dialog fashion on the client computer side and at the same time, the content of the desired file is copied and stored in the specified folder. The programs using such procedures include those in which the original name of the file displayed in the dialog fashion cannot be changed and the content of the file can be copied only under the original name of the file and those in which the operator of the client computer is caused to change the name of the file and the content of the file can be copied under the changed file name.
3. A dialog box for inputting a file name is displayed on the client computer side in place of a dialog box showing the name of the file to be downloaded and the file is copied under the file name input by the operator and stored in the specified file folder.

There are cases where the host computer and the client computer are different from each other in attribute of the operating system installed therein. For example, there are cases where the operating systems of the host computer and the client computer are different in system, e.g., Windows ® OS and Mac ® OS, are different in version though the same in system, e.g., Windows ® OS 3.1 and Windows ® OS 2000, and are different in character code though the same in system, e.g., English Windows ® OS and Japanese Windows ® OS. Since operating systems different in attribute are different in font and/or the number of characters of the file name to be used, the aforesaid three download procedures respectively give rise to the following problems.

That is, the first download procedure gives rise to a problem that since the content of the file is copied and stored under the original file name of the file, when a file whose file name cannot be dealt with the operating system of the client computer is downloaded, the file is stored under the name including therein a character code which cannot be dealt with the operating system of the client computer. As a result, error occurs on the client computer side and at the same time writing errors can occur when copying the file, whereby an incomplete file having therein errors can be generated. Since such files cannot be deleted and can be retained as a permanent file, they can destroy other files or the overall system of the client computer at the worst.

When a file is transferred from one computer on which the file is created to another computer different from said one computer in attribute of the operating system installed therein by way of a mobile medium such as a floppy disc ®, a CD-ROM or an MO, the same problem occurs.

When the aforesaid problem occurs in a special field, for instance, when the aforesaid problem occurs when firmware of a printer is downloaded, not only the system of the client computer but also the printer can be destroyed when firmware having errors is installed in the printer.

Those of the second download procedure where the original name of the desired file to be downloaded is displayed in a dialog fashion on the client computer side and the original name of the file cannot be changed give rise to the same problem.

Though, those of the second download procedure where the original name of the desired file to be downloaded is displayed in a dialog fashion on the client computer side and the operator of the client computer can change the original name of the file can avoid the aforesaid problem to some extent by changing the file name of the file, the operator must determine whether the file name shown in the dialog fashion is to be changed. However, even if the operator recognizes that the file name should be changed, the operator can forget to change the file name and accordingly, those of the second download procedure where the original name of the desired file to be downloaded is displayed in a dialog fashion on the client computer side and the operator of the client computer can change the original name of the file cannot completely avoid the aforesaid problem.

Though the third download procedure, where the original file name is not displayed and the operator of the client computer inputs a file name, can completely avoid the aforesaid problem, it requires the operator to input a file name even when a file is to be downloaded from a host computer having the same operating system as the client computer, which is troublesome.

### SUMMARY OF THE INVENTION

In view of the foregoing observations and description, the primary object of the present invention is to provide a file download system, a file download program and a file creating system which allows a file to be downloaded to a computer in safety and conveniently even from another computer having a different operating system.

In accordance with a first aspect of the present invention, there is provided a file download system for downloading a file to a computer having a first operating system comprising
an operating system attribute obtaining means which reads the attribute of a second operating system which created the file to be downloaded,
a file name changing means which changes the file name of the file to be downloaded to a file name conforming to the first operating system or causes the operator of the computer to input a file name with the file name of the file to be downloaded not displayed, when the attribute of the second operating system is unknown or is different from the attribute of the first operating system, and
a copying means which copies said file under the file name obtained by the file name changing means.

The term "the attribute of an operating system" as used here means one or more attributes related to the file name such as the system of the operating system, e.g., Windows ® OS or Mac ® OS, the version of the operating system, the language of the operating system, and the like.

Further, the term "download" as used here should be interpreted to include, as well as "download" in the usual sense (i.e., copying a file from a host computer such as a file server to a client computer) , copying a file to a computer from a mobile medium such as a floppy disc ®, a CD-ROM or an MO.

It is preferred that the copying means copies said file under the original file name of the file when the first and second operating systems are the same in operating system. At this time, the original file name may be displayed in a dialog fashion though need not be displayed.

It is further preferred that the file name changing means be provided with a display means which displays a message representing that the attribute of the second operating system is unknown or is different from the attribute of the first operating system.

In accordance with a second aspect of the present invention, there is provided a download program for causing a computer to perform the download processing of the present invention for downloading a file to a computer having a first operating system, the program comprising the procedures of
reading the attribute of a second operating system which created the file to be downloaded,
changing the file name of the file to be downloaded to a file name conforming to the first operating system or causing the operator of the computer to input a file name with the file name of the file to be downloaded not displayed, when the attribute of the second operating system is unknown or is different from the attribute of the first operating system, and
causing the computer to copy said file under the file name changed or input.

The download program of the present invention may be applied to executive application software for downloading firmware for a printer.

Further, the download program of the present invention may be recorded in a computer readable medium so that the computer can perform the procedures of the present invention when loaded with the recording medium. A skilled artisan would know that the computer readable medium is not limited to any specific type of storage devices and includes any kind of device, including but not limited to CDs, floppy disks, RAMs, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including higher level languages, assembly language and machine language.

Since the file download system of the present invention reads the attribute of the second operating system from information added to the file, it is necessary for each file to be added with information representing the attribute of the second operating system which created the file to be downloaded.

In accordance with the third aspect of the present invention, there is provided a file creating system comprising
a file creating means for creating content of a file, and
an additional information creating means which creates an additional information to be attached to the file, wherein the improvement comprises that
the additional information includes information representing the attribute of the second operating system which created the file to be downloaded.

The file download system in accordance with the present invention is safe in that the file downloaded to the client computer is stored therein under the file name conforming to the operating system of the client computer even if the attribute of the operating system which created the file is different from the attribute of the operating system of the client computer since the file name of the file to be downloaded is changed to conform to the operating system of the client computer when the attribute of the operating system which created the file is unknown or is different from the attribute of the operating system of the client computer. Further, since the original file name of the file to be downloaded is not displayed when causing the operator of the client computer to input a file name, the operator can be prevented from forgetting to input a file name.

Further, the file download system of the present invention is convenient since it copies the file to be downloaded under the original file name of the file when the file to be downloaded was created by an operating system having the same attributes as that of the client computer.

The operator of the client computer can download by mistake a file created by an operating system different in attribute from the operating system of the client computer. When the file download system is provided with a display means which displays a message representing that the attribute of the operating system which created the file is unknown or is different from the attribute of the operating system of the client computer, the operator of the client computer can be caused to recognize his or her mistake.

### BRIEF DESCRIPTION OF THE DRAWINGS

Figure 1 is a block diagram showing a computer A (a file creating system in accordance with an embodiment of the present invention),
Figure 2 is a block diagram showing a computer B (a file download system in accordance with an embodiment of the present invention),
Figure 3 is a view showing a flow chart for illustrating the operation of the download processing section of the computer B, and
Figure 4 is a view showing the dialog box displayed by the file name changing section of the computer B.

### DESCRIPTION OF THE PREFERRED EMBODIMENTS

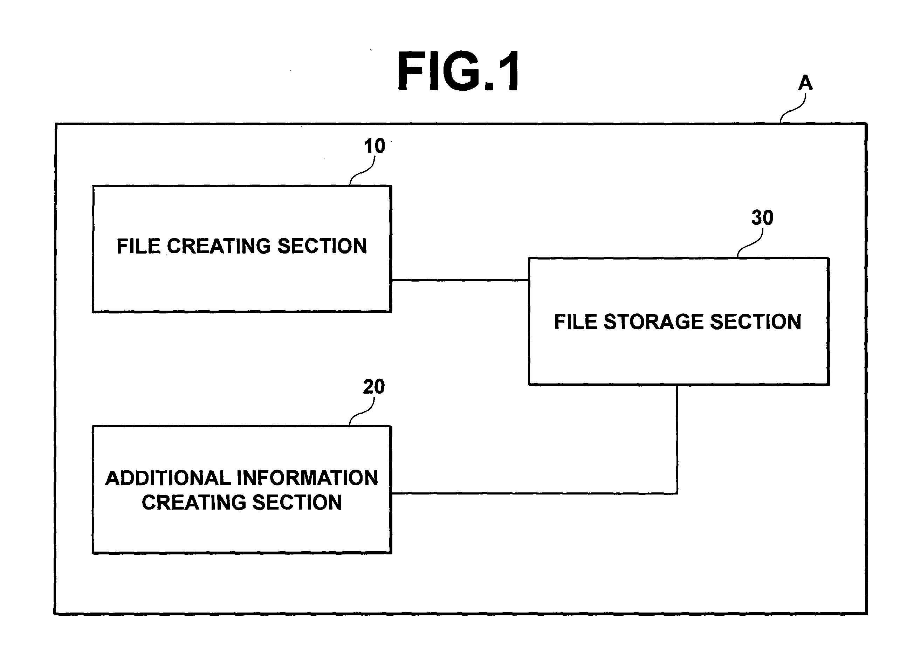

In Figure 1, a computer A, a file creating system in accordance with an embodiment of the present invention is installed with an operating system OS(A), and is provided with a file creating section 10 which creates content of a file, an additional information creating section 20 which creates an additional information to be attached to the file and a file storage section 30 which stores the content of the file attached with the additional information. The additional information creating section 20 creates operating system attribute information on the name of the operating system of the computer A, the version of the operating system, the language of the operating system and the like as well as usual information on the file size and the like.

Since files created by the computer A include operating system attribute information in their additional information, the attribute of the operating system which created the file can be read out by referring to the additional information, e.g., by referring to the property of the file.

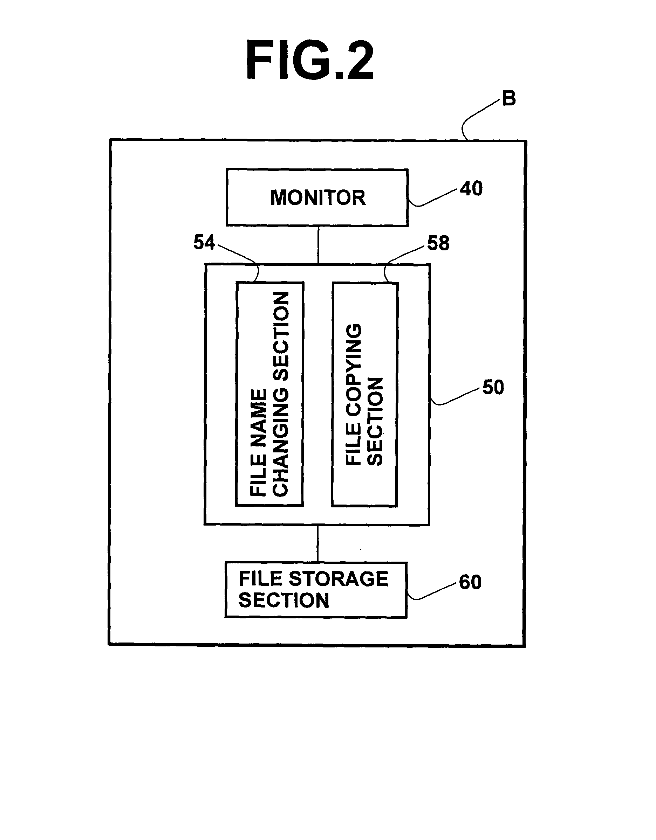

In Figure 2, a computer B, a file download system in accordance with an embodiment of the present invention is installed with an operating system OS(B), and is provided with a file download processing section 50 for downloading a file, a monitor 40 which displays messages and/or dialog boxes involved in the download processing, and a file storage section 60 which stores the downloaded file. The file download processing section 50 comprises a file name changing section 54 and a file copying section 58. The file name changing section 54 reads out the attribute of the operating system which created the file and compares that with the attribute of the operating system OS(B). When the attribute of the operating system which created the file and that of the attribute of the operating system OS(B) conform to each other, the file name changing section 54 does not execute processing for changing the file name. Whereas when the attribute of the operating system which created the file and that of the attribute of the operating system OS (B) do not conform to each other, the file name changing section 54 does execute processing for changing the file name. That is, the file name changing section 54 causes the monitor 40 to display a message representing that the operating system which created the file and the operating system OS(B) are different from each other in attribute together with a dialog box which prompts the operator of the computer B to input a file name. The file storage section 60 stores a copy of the file copied by the file copying section 58 under the file name obtained by the file name changing section 54.

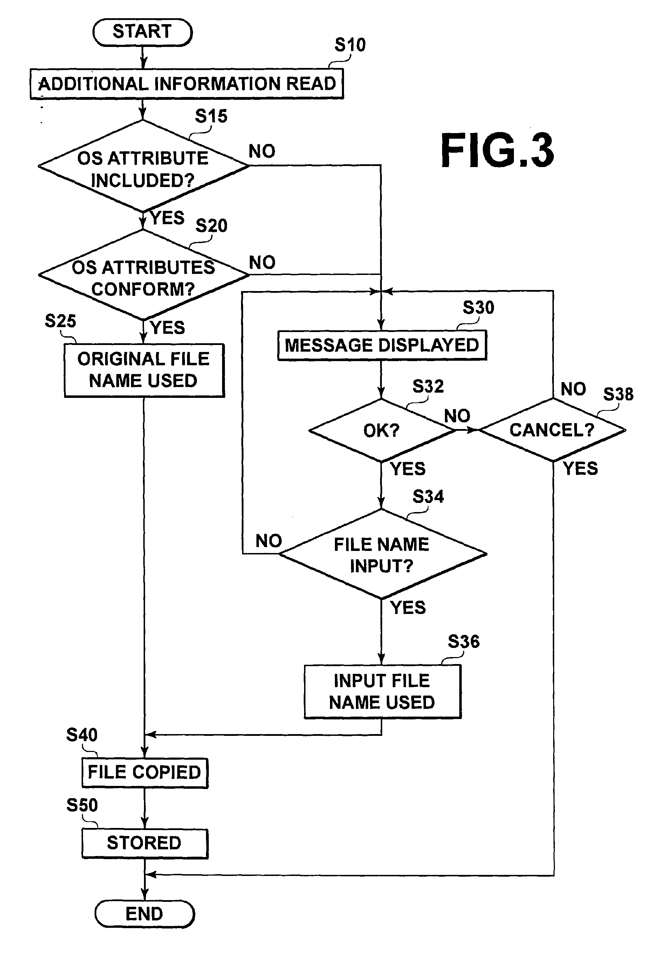

As shown in Figure 3, when downloading a file, the file name changing section 54 reads out additional information of the file (step S10) and determines whether the additional information of the file includes information on operating system attribute (step S15). When there is included information on operating system attribute in additional information of the file (step S15:YES), then the file name changing section 54 determines whether the operating system attribute represented by the information on operating system attribute included in the additional information of the file conforms to the attribute of the operating system OS(B) of the computer B (step S20). When it is determined that the operating system attribute represented by the information on operating system attribute included in the additional information of the file conforms to the attribute of the operating system OS(B) of the computer B (step S20:YES), the file name changing section 54 determines that the original file name is used as it is (step S25). That is, the file copying section 58 copies the file (step S40) and stores it in the file storage section 60 under the original file name (step S50).

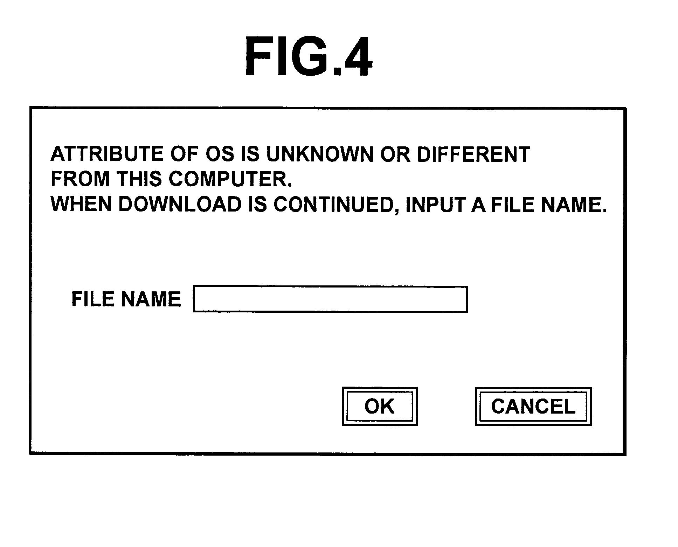

On the other hand, when there is included no information on operating system attribute in additional information of the file (step S15:NO), or when it is determined that the operating system attribute represented by the information on operating system attribute included in the additional information of the file does not conform to the attribute of the operating system OS(B) of the computer B (step S20:NO), the file name changing section 54 causes the monitor 40 to display in a dialog fashion a message that "the attribute of the operating system which created the file to be downloaded is unknown or does not conform to the attribute of the operating system of this computer" together with instruction that "please input a file name when download is to be continued" and a blank in which a file name is written as shown in Figure 4 (step S30). When OK button is clicked (step S32:YES) to prompt to continue download, the file name changing section 54 checks whether a file name has been input (step S34). When it is determined that a file name has not been input (step S34:NO), the file name changing section 54 causes the monitor 40 to display the message shown in Figure 4 as it is to prompt the operator to input a file name. When it is determined that a file name has been input (step S34:YES), the file name changing section 54 determines that the input file name is used (step S36). That is, the file copying section 58 copies the file (step S40) and stores it in the file storage section 60 under the input file name (step S50).

When cancel button is pushed to interrupt the download (step S38:YES), the file name changing section 54 stops the download.

As can be understood from the description above, in the file download system of the embodiment described above, the attribute of the operating system of the computer to which a file is to be downloaded is compared with that of the operating system which created the file, and the file is stored in the computer under the original file name of the file to be downloaded when the latter conforms to the former whereas when the latter does not conform to the former or is unknown, the operator of the computer is caused to input a file name with the original file name of the file to be downloaded not displayed and the file is stored in the computer under the input file name. Accordingly, a file name which cannot be dealt with by the computer to which the file is to be downloaded cannot be used as it is, which ensures safety. Further, the file download system of the embodiment described above is convenient since in the file download system, it is not necessary to input a file name when the attribute of the operating system of the computer to which the file is to be downloaded conforms to that of the operating system of the computer which created the file.

Though, in the computer B shown in Figure 2, the download processing section 50 causes the operator to input a file name when the attribute of the operating system of the computer which created the file is unknown or does not conform to that of the operating system of the computer to which the file is to be downloaded, the download processing section 50 may be arranged to automatically change the original file name of the file to be downloaded to a file name conforming to the operating system of the computer to which the file is to be downloaded.

Further, when the original file name of the file to be downloaded conforms to the operating system of the computer to which the file is to be downloaded though the attribute of the operating system of the computer which created the file does not conform to that of the operating system of the computer to which the file is to be downloaded, the original file name may be used unchanged. This arrangement causes it unnecessary to input a file name for all the files when the attribute of the operating system of the computer which created the file does not conform to that of the operating system of the computer to which the file is to be downloaded, and accordingly, improves the efficiency while ensuring the safety.

## Claims

1. A file download system for downloading a file to a computer having a first operating system comprising
an operating system attribute obtaining means which reads the attribute of a second operating system which created the file to be downloaded,
a file name changing means which changes the file name of the file to be downloaded to a file name conforming to the first operating system or causes the operator of the computer to input a file name with the file name of the file to be downloaded not displayed, when the attribute of the second operating system is unknown or is different from the attribute of the first operating system, and
a copying means which copies said file under the file name obtained by the file name changing means.

2. A file download system as defined in Claim 1 in which the copying means copies said file under the original file name of the file when the first and second operating systems are the same in operating system.

3. A file download system as defined in Claim 1 or 2 in which the file name changing means is provided with a display means which displays a message representing that the attribute of the second operating system is unknown or is different from the attribute of the first operating system.

4. A file download system for downloading a file to a computer having a first operating system comprising
a file name changing means which changes the file name of the file to be downloaded to a file name conforming to the first operating system or causes the operator of the computer to input a file name with the file name of the file to be downloaded not displayed ,when the file name does not conform to the first operating system, and
a copying means which copies said file under the file name obtained by the file name changing means.

5. A download program for causing a computer to perform download processing for downloading a file to a computer having a first operating system, the program comprising the procedures of
reading the attribute of a second operating system which created the file to be downloaded,
changing the file name of the file to be downloaded to a file name conforming to the first operating system or causing the operator of the computer to input a file name with the file name of the file to be downloaded not displayed, when the attribute of the second operating system is unknown or is different from the attribute of the first operating system, and
causing the computer to copy said file under the file name changed or input.

6. A download program as defined in Claim 4 in which the download program is applied to executive application software for downloading firmware for a printer.

7. A computer readable medium in which a download program defined in Claim 4 or 5 is recorded.

8. A file creating system comprising
a file creating means for creating content of a file, and
an additional information creating means which creates an additional information to be attached to the file, wherein the improvement comprises that
the additional information includes information representing the attribute of the second operating system which created the file to be downloaded.
